# DEMANDE DE BREVET EUROPEEN

(11) **EP 1 529 763 A2**
(43) Date de publication de la demande: **11.05.2005**
(21) Numéro de dépôt: 04105594.8
(22) Date de dépôt: 08.11.2004
(51) Int. Cl.: C04B 35/185, C04B 35/453

(54) **Carreaux de pavement céramiques à propriétés mécaniques et résistance à l'abrasion améliorées**

(30) Priorité: 07.11.2003 BE 200300606
(71) Demandeur: Centre de Recherche de l'Industrie Belge de la Ceramique (C.R.I.B.C.), 7000 Mons (BE); INSTITUT NATIONAL INTERUNIVERSITAIRE DES SILICATES, SOLS ET MATERIAUX (INISMa), B-7000 Mons (BE)
(72) Inventeur: Cambier, Francis, 7190, Ecaussinnes (BE); Descamps, Philippe, 6120, Ham Sur Heure (BE); Tirlocq, Jacques, 7331, Baudour (BE)
(74) Mandataire: Callewaert, Jean

(57) **Abrégé**

L'invention est relative à une composition et un produit céramique pour revêtement de sols ou de murs comprenant dans la masse céramique, outre une phase cristalline de mullite (3Al₂O₃·2SiO₂), une phase cristalline de gahnite (Al₂O₃·ZnO), toutes deux formées in situ durant la grésification.

## Description

L'invention est relative à un produit formé essentiellement de carreaux de pavement céramiques pour le revêtement de sols ou de parois présentant une masse céramique dans laquelle est incorporée une phase cristalline de mullite (3Al₂O₃·2SiO₂) formée in situ durant une grésification.

Généralement, la majorité des compositions céramiques pour la fabrication de carreaux céramiques, favorisent, lors du traitement thermique, la formation de mullite. La présence de mullite avec une dureté Dₘₒₕₛ élevée comprise entre 7,5 et 8 exerce une influence bénéfique sur la tenue à l'usure du carrelage.

Cependant, la mullite se forme à température relativement élevée d'environ 950°C à 1000° C et sa cinétique de formation est relativement lente, de sorte que, lorsque l'on adopte des cycles de grésification rapides, elle se retrouve en très faible proportion dans les produits cuits.

Un des buts essentiels de l'invention est de proposer un produit céramique, en particulier des carreaux céramiques, qui présente une résistance à l'usure améliorée et une porosité qui est substantiellement inférieure à la porosité des produits connus de type grès-cérame, ainsi que des valeurs de module de rupture en flexion qui sont de 50 à 100 % plus élevées que celles des carreaux céramiques classiques.

A cet effet, suivant l'invention, la masse céramique précitée contient en outre une phase cristalline de gahnite qui est également formée in situ durant ladite grésification.

Suivant une forme de réalisation particulière, le produit, suivant l'invention, présente un module de rupture σ_{F} compris entre 75 et 115 MPa.

Avantageusement, le produit, suivant l'invention, présente, en particulier, une porosité ouverte comprise entre 0,25 % et 1 % en volume.

Suivant une forme de réalisation particulièrement avantageuse,, ladite masse céramique comprend de 10 à 30 % en poids de mullite et entre 2 et 17 % en poids de gahnite.

L'invention est également relative à une composition pour la fabrication d'un produit, en particulier pour la fabrication de carreaux céramiques, comprenant entre 60 et 70 % en poids de SiO₂, entre 20 et 33 % en poids de Al₂O₃ et des fondants. Cette composition est caractérisée en ce qu'elle contient entre 1 et 7.5 % en poids de ZnO, la teneur en ZnO étant préférentiellement comprise entre 4 et 5 % en poids.

D'une manière intéressante, la teneur en Al₂O₃ dans cette composition est supérieure à la teneur en ZnO d'une manière telle à obtenir, après une grésification à au moins 880°C, un produit contenant dans sa masse de la gahnite et de la mullite.

L'invention concerne, de plus, un procédé de fabrication de carreaux céramiques, notamment pour le revêtement de sols et de parois suivant lequel on presse, à partir d'un mélange poudreux sensiblement homogène, comprenant des silicates, de l'oxyde d'aluminium et des fondants, des plaques ou blocs que l'on soumet ensuite à un traitement thermique de type « grésification » jusqu'à former des plaques ou blocs céramiques contenant une phase cristalline de mullite. Ce procédé est caractérisé en ce que l'on ajoute au mélange précité de l'oxyde de zinc en quantité suffisante pour permettre la formation, durant la grésification, d'une phase cristalline de gahnite, conjointement avec la phase cristalline de mullite.

La grésification est le traitement thermique adopté pour la cuisson des céramiques traditionnelles telles carreaux, articles sanitaires, porcelaines. Il consiste à porter l'article céramique mis en forme, généralement très poreux, à une température inférieure à la fusion des constituants principaux. Cette température permet la formation, aux joints de grain, d'un col de phase liquéfiée grâce à l'action d'oxydes fondants. La phase liquéfiée facilite le rapprochement des grains et donc la densification de l'article céramique poreux. Elle est aussi le siège de la cristallisation de nouvelles phases telles que la mullite et, selon l'invention, la gahnite formée conjointement.

D'autres détails et particularités de l'invention ressortiront de la description donnée ci-après, à titre d'exemple non limitatif, de quelques formes de réalisation particulières du produit, de la composition et du procédé suivant l'invention, avec référence aux figures annexées.

Les figures 1 et 2 représentent une photographie de la microstructure du produit, suivant l'invention, observée par microscopie électronique à balayage.

La figure 3 est un graphique présentant l'évolution du module Young du produit, suivant l'invention, en fonction de la teneur en ZnO.

La figure 4 est un graphique présentant l'évolution du module de rupture du produit, suivant l'invention, en fonction de la teneur en ZnO.

La figure 5 est un graphique présentant l'évolution de la ténacité du produit, suivant l'invention, en fonction de la teneur en ZnO.

La figure 6 est un graphique présentant l'évolution du volume d'usure du produit, suivant l'invention, en fonction de la teneur en ZnO.

L'invention concerne, plus particulièrement, la fabrication de carreaux céramiques pour revêtement de sols, et éventuellement de murs, qui se caractérise par le fait qu'ils contiennent dans leur masse même conjointement des phases cristallines de type mullite et gahnite dans une optique de renforcement des propriétés mécaniques et de la tenue à l'usure.

Actuellement, dans l'industrie céramique, du ZnO est généralement introduit au sein d'une glaçure qui est appliquée à la surface de carreaux céramiques, et non dans la masse céramique de base, qui est la caractéristique essentielle du produit suivant l'invention. Cette introduction du ZnO conduit généralement à la formation de silicate sous forme de willemite (ZnO.SiO₂).

Suivant l'état antérieur de la technique l'on ne fait pas référence à l'incorporation de ZnO dans les masses céramiques pour des revêtements de sols avec pour fmalité d'accroître les propriétés mécaniques et, à terme, la résistance à l'usure des produits.

Les seuls travaux recensés se réfèrent :
■ à la fabrication de porcelaine pour laquelle l'ajout de ZnO a pour effet d'abaisser la température de cuisson. Cependant, en dépit du rôle effectif de fondant de cet oxyde, sa présence conduit à la formation de willemite, de dureté faible (Dₘₒₕₛ = 5.5) et dont la résistance à l'attaque chimique, et spécialement aux acides, est également inférieure à celle de la gahnite ;
■ à la fabrication de vitrocéramiques au borate de lithium, incorporant du ZnO et des agents de nucléation tels que ZrO₂ et TiO₂, pour lesquelles, après la fusion complète, un palier à plus basse température permet de cristalliser la mullite et la gahnite au sein du verre.

Généralement, la majorité des compositions céramiques favorisent, lors du traitement thermique de type grésification, la formation de mullite qui cristallise à une température relativement élevée entre 950° et 1000° C. La cinétique de formation de la mullite est lente, de sorte que, lorsque l'on adopte des cycles de cuisson rapides, elle se retrouve en très faible proportion dans les produits cuits.

Pour pallier cet inconvénient et accroître la proportion de phases cristallisées au sein des carreaux céramiques, l'invention propose d'incorporer du ZnO dans les compositions céramiques pour la fabrication des carreaux dans le but de favoriser la formation de gahnite en complément de la mullite.

Le choix de la gahnite pourrait a priori paraître paradoxal puisque la formation de gahnite à partir d'un mélange de poudres d'Al₂O₃ et de ZnO procède selon un mécanisme de réaction à l'état solide particulier qui tend à inhiber la densification et conduit à l'obtention de produits poreux. Néanmoins, il a été observé, d'une façon inattendue, que lors du processus de grésification (mécanisme avec phase liquide aux joints de grains), l'appauvrissement en Al₂O₃ suite à la formation de la gahnite augmente la fusibilité de la phase fondue siliceuse formée, ce qui, d'une part, facilite la digestion des grains de quartz présents et, d'autre part, permet de réduire la porosité par un mécanisme d'écoulement visqueux.

Il en résulte des matériaux denses à forte teneur en phases cristallines de dureté élevée. La gahnite se caractérise, en particulier, par une valeur de la dureté analogue à celle de la mullite, en l'occurrence 7.5 à 8 sur l'échelle de Mohs.

Pour favoriser la germination et la croissance (nucléation) des cristaux de gahnite, des catalyseurs tels que des poudres de ZrO₂ et TiO₂ peuvent, avantageusement, être introduits en petite quantité dans le mélange des matières premières. Dans l'exemple 1, l'effet d'un ajout de TiO₂ est rapporté.

De manière générale, la formation in situ de gahnite via l'incorporation de ZnO au sein des carreaux pour revêtement de sol conduit aux avantages suivants :
- une porosité faible et inférieure à 0,3 % ;
- une augmentation des propriétés mécaniques des produits, en terme de ténacité et de modules d'élasticité et de rupture (augmentation de la résistance au choc mécanique) ;
- une augmentation sensible de la résistance à l'usure (abrasion selon EN102)
- un appauvrissement en cours de grésification de la composition en Al₂O₃, par la formation in situ de gahnite, ce qui conduit à une augmentation de la fusibilité de la phase fondue siliceuse et favorise la digestion du quartz ;
- la perspective, suite à cette réduction de la teneur en quartz, d'utiliser des moyens de cuisson modernes («fast firing»), à une vitesse de cuisson relativement élevée, tout en garantissant la présence de phases cristallines faisant office de phases de renforcement ;
- peu ou pas de modification du procédé industriel de fabrication, en ce sens que les compositions peuvent être préparées selon la pratique habituelle au sein de l'unité de production classique ;
- peu d'incidence sur la température de frittage avec, à noter, la présence de ZnO favorable sur le plan de la densification ;
- une tolérance relativement importante sur les conditions de cuisson, ce qui facilite l'adéquation du procédé aux outils industriels ;
- Peu ou pas de modification de la coloration des produits cuits, quelle que soit la quantité d'oxyde de zinc incorporée.

Les exemples donnés ci-après illustrent les propriétés du produit et les compositions ainsi que le procédé suivant l'invention en faisant une comparaison avec une composition d'un produit classique pris en référence.

### Exemple 1:

Le premier exemple est relatif à la préparation de masses céramiques pour lesquelles les proportions en argiles, en feldspaths et en oxyde de zinc ont été adaptées de sorte qu'une fois la gahnite complètement cristallisée, le rapport Al₂O₃/SiO₂ de même que la teneur en fondants, comme Na₂O, K₂O et CaO, tendent vers ceux de la composition d'un mélange de référence pour la production de carreaux classiques de type grès-cerame.

Le mélange de référence a été sélectionné afin de pouvoir quantifier le gain que la présence de la gahnite induit sur le plan des caractéristiques physiques, mécaniques ainsi qu'en terme de résistance à l'abrasion des carreaux produits à partir de ce mélange.

**Tableau 1 :**

| Composition des mélanges visant à induire la cristallisation de gahnite et composition de référence classique de carreaux de pavement de type grès-cerame. | | | |
|---|---|---|---|
| **Constituant** | **Composition à base de ZnO (% en poids)** | **Composition à base de ZnO avec ajout de TiO**_{**2**} **(% en poids)** | **Composition du produit de référence (% en poids)** |
| SiO₂ | 61.3 | 60.7 | 68.8 |
| Al₂O₃ | 27.3 | 27.0 | 24.6 |
| MgO | 0.7 | 0.7 | 0.5 |
| TiO₂ | 1.2 | 2.2 | 1.3 |
| ZnO | 4.5 | 4.4 | -- |
| K₂O | 1.6 | 1.6 | 1.6 |
| Na₂O | 0.8 | 0.8 | 0.7 |
| CaO | 1.1 | 1.1 | 1.1 |
| Autres | 1.5 | 1.5 | 1.4 |

**Dans le tableau 1**, les compositions qui **contiennent du** ZnO présentent une teneur en cet oxyde qui a été calculée afin d'obtenir après cuisson une quantité de gahnite égale à 10 % en poids. La teneur en ZnO, suivant l'invention dans l'exemple 1, est de 4,5 % en poids.

Pour l'une d'entre elles, hormis la teneur en TiO₂ issue des matières premières minérales comme les argiles et le feldspath, une quantité additionnelle de 1 % en poids de TiO₂ a été ajoutée de manière à évaluer le rôle qu'exerce ce catalyseur de nucléation sur la cinétique de cristallisation de la gahnite.

En ce qui concerne la préparation des matériaux, les mélanges ont été homogénéisés à l'aide d'un mélangeur à double hélice (en Z). Ensuite, après séchage en étuve à 40° C, les poudres obtenues ont été tamisées à l'aide d'un tamis d'ouverture 63 µm.

A partir de cette poudre calibrée, des compacts avec un diamètre de 40 mm ont été pressés uniaxialement à une pression de 400 kg/cm².

Enfin, sur base des analyses dilatométriques, ces compacts ont été frittés à des températures respectivement de 1175° C et 1200° C en adoptant des temps de palier de 1 et 2 heures.

Les propriétés physiques et minéralogiques des compacts frittés sont reportées au tableau 2.

A l'examen de ce tableau, il apparaît que :
- quelles que soient les conditions de frittage, les produits se caractérisent par une porosité fortement réduite par rapport à celle du produit obtenu à partir du mélange de référence ;
- à la température de cuisson la plus basse, la présence de TiO₂ exerce apparemment un effet bénéfique sur la densification. La porosité est inférieure à 0,1 % pour les compacts frittés à une température de 1175° C pendant 1 heure ;
- la cristallisation conjointe de gahnite et de mullite s'est effectivement opérée même si, en ce qui concerne la mullite, sa teneur apparaît moindre qu'au sein du carrelage de référence ; et
- tous les produits cuits issus des compositions suivant l'invention, contenant du ZnO, présentent une teneur en gahnite de 10 % en poids ce qui prouve que la totalité de l'oxyde de zinc a été consommée pour la formation de la gahnite indifféremment de la présence de catalyseur de nucléation et des conditions de traitement thermiques.

Par la suite, des mesures de module de rupture en flexion ainsi que de la résistance à l'abrasion profonde (selon la norme EN 102) ont permis de confirmer l'intérêt de favoriser la cristallisation de gahnite au sein des carreaux de pavement.

Le tableau 3 reprend les modules de rupture et les volumes d'usure abrasive mesurés sur les produits obtenus selon les compositions du tableau 1 suivant les conditions du procédé du tableau 2.

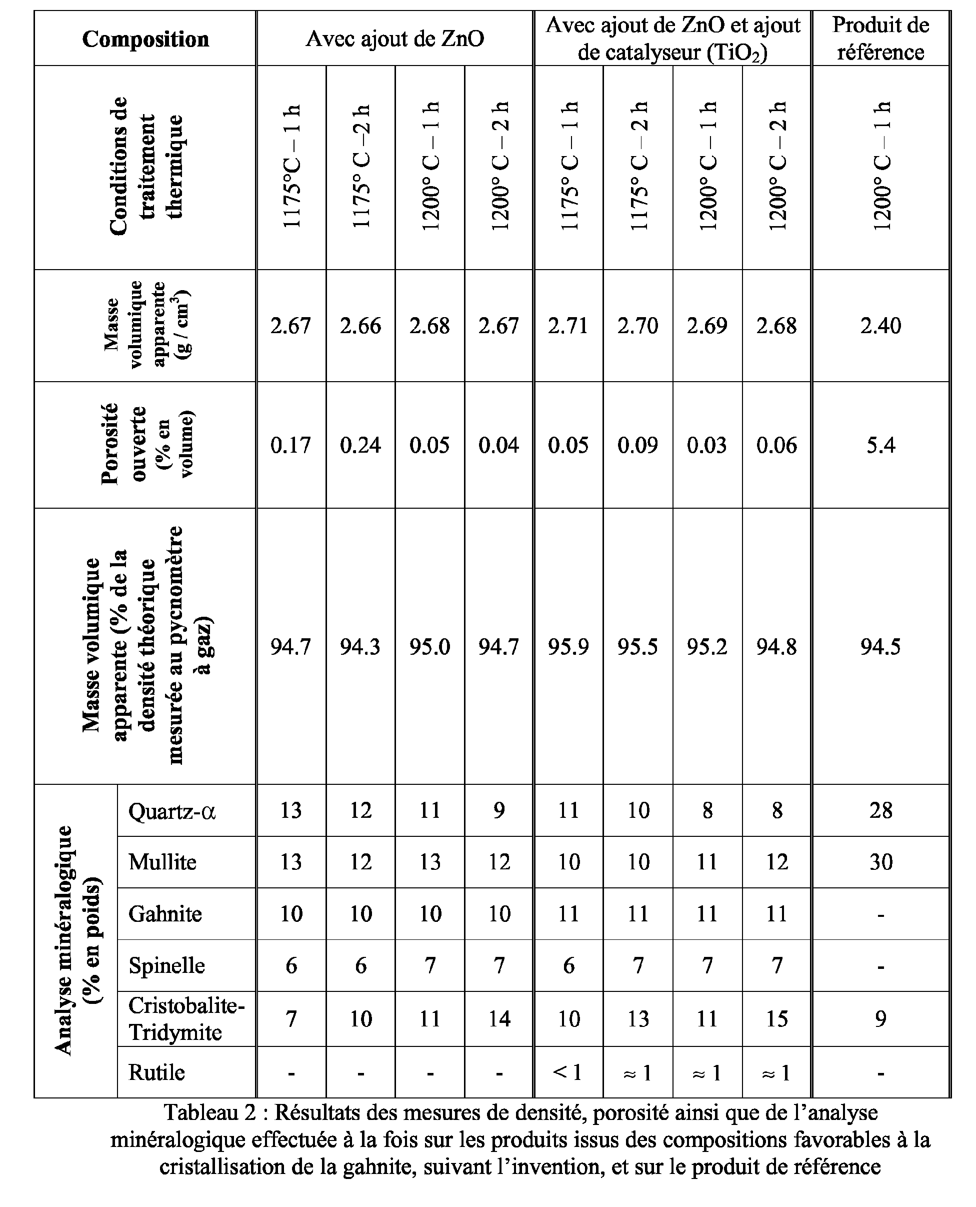

**Tableau 3 :**

| Modules de rupture et volumes d'usure abrasive (selon norme EN 102) mesurés à la fois sur les matériaux renforcés à la gahnite et sur le produit de référence. | | | | |
|---|---|---|---|---|
| **Type d'échantillon** | **Conditions de frittage** | **σ**_{**F**} **(MPa)** | **volume abradé (mm**^{**3**}**)** | **Réduction du volume d'usure (%)** |
| Composition avec ajout de ZnO | 1175°C - 1 h | 113 | 97 | ≈ 19 |
| | 1175° C - 2 h | 105 | 92 | ≈ 23 |
| | 1200° C - 1 h | 107 | 98 | ≈ 18 |
| | 1200° C - 2 h | 99 | 95 | ≈ 21 |
| Composition avec ajout de ZnO et d'un catalyseur de nucléation sous forme del % en poids de TiO₂ | 1175° C - 1 h | 96 | 97 | ≈ 19 |
| | 1175° C - 2 h | 108 | 97 | ≈ 19 |
| | 1200° C - 1 h | 92 | 105 | ≈ 13 |
| | 1200° C - 2 h | 87 | 101 | ≈ 16 |
| Carreau de référence | 1200° C - 1 h | 57 ± 4 | 120 ± 3 | - |

Du tableau 3, il apparaît que :
― les matériaux fabriqués à partir des compositions à base de ZnO, sans ajout supplémentaire de TiO₂, présentent des valeurs de module de rupture en flexion σ_{F} qui sont plus de 100 % plus élevées et qui sont plus de 50% plus élevées, lorsque du TiO₂ est ajouté, par rapport à celle du produit de référence.
― cette augmentation des valeurs du module de rupture σ_{F} se double d'une amélioration sensible de la résistance à l'usure par abrasion qui se traduit par une réduction systématique des volumes abradés variant de 13 à 21 %.

Ce résultat est particulièrement remarquable surtout si l'on tient compte du bon comportement à l'usure que présente déjà le produit de référence.

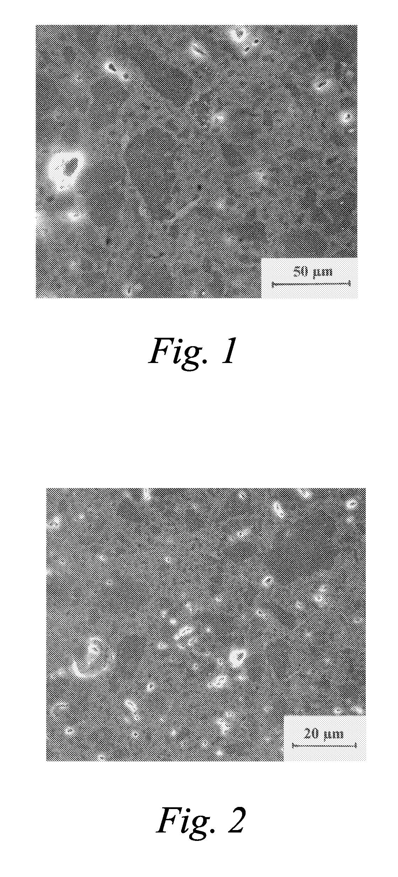

Enfin, la microstructure de ces matériaux observée par microscopie électronique à balayage révèle le haut degré de cristallinité des carreaux renforcés à la gahnite, ce qui constitue incontestablement un élément favorable sur le plan de l'usure. Les figures 1 et 2 représentent des micrographies SEM de produits frittés dont la composition initiale contient 4.5 % en poids de ZnO. On notera également le caractère bimodal de la distribution en taille des grains, qui s'avère bénéfique en terme de propriétés mécaniques.

### Exemple 2 :

Dans cet exemple, différentes teneurs en ZnO ont été introduites au sein de la composition céramique de référence, destinée à la fabrication de carreaux. En particulier, des essais ont été réalisés avec une teneur de 1,5 %, 3 %, 4,5 % et 6 % en poids de ZnO obtenue par ajout au mélange de référence, dont la composition est la même que celle présentée dans le tableau 1.

Par rapport à l'exemple précédent, la différence essentielle se situe au niveau de la composition de départ qui n'a pas été modifiée (en terme de rapport SiO₂ / Al₂O₃) pour pallier le fait qu'une certaine quantité d'Al₂O₃ est consommée lors de la formation de la gahnite.

Globalement, le même procédé de fabrication a été adopté si ce n'est, d'une part, que les dimensions du moule de pressage sont différentes et permettent de réaliser des pièces de plus grandes dimensions et, d'autre part, que des conditions de cuisson uniques ont été adoptées. En particulier, des carreaux de 100 x 100 mm pour lesquels le palier de cuisson était de 2 heures à une température de 1200°C ont été produits.

Après cuisson, les différents produits ont été caractérisés en terme de densité et de porosité de même que sur le plan minéralogique. Les résultats de cette caractérisation sont repris dans le tableau 4.

Les résultats de ces analyses traduisent de manière évidente que même de très faibles quantités de ZnO, comme par exemple 1.5 % en poids, suffisent à réduire de manière significative la porosité du carreau obtenu.

Cet effet a d'ailleurs tendance à s'amplifier pour des teneurs en ZnO croissantes avec cependant un optimum aux alentours de 4.5 % en poids de ZnO.

De nouveau, l'analyse par DRX indique que la formation de la gahnite est, dans tous les cas, totale mais celle-ci a néanmoins tendance à se produire au détriment de la mullite vraisemblablement du fait que la teneur en Al₂O₃ n'a pas été ajustée en conséquence.

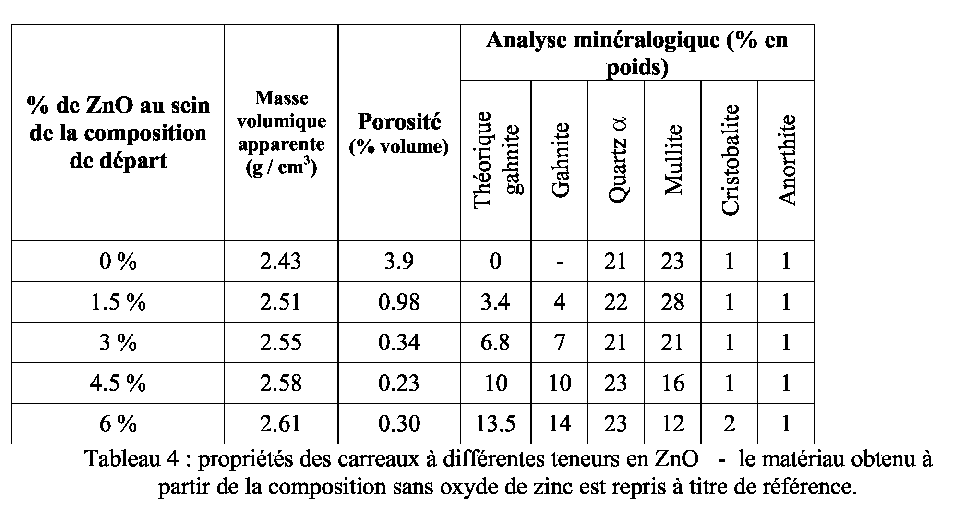

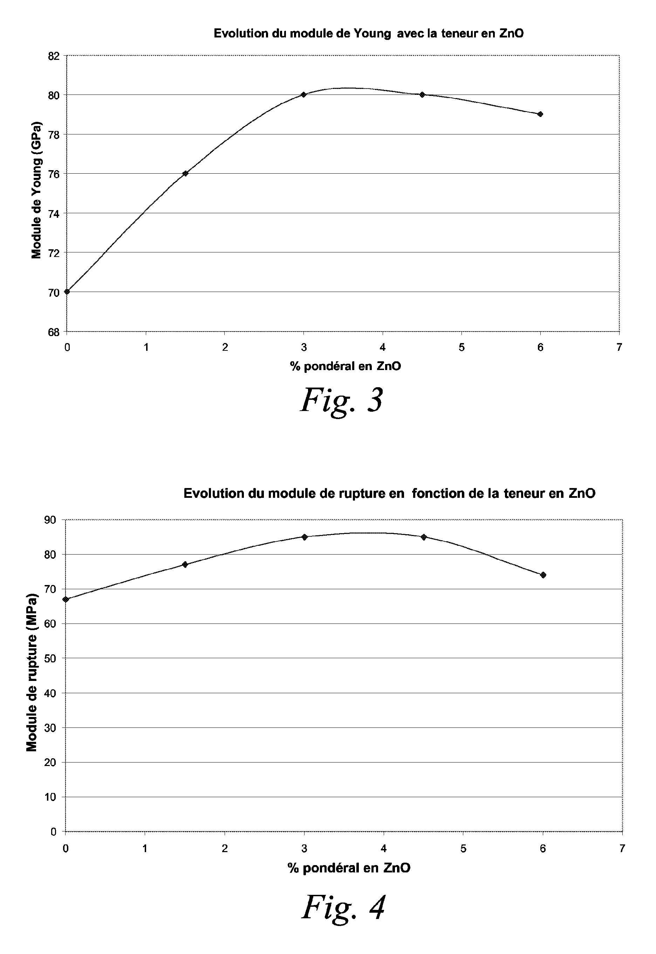

Sur le plan des propriétés mécaniques comme le module de Young E, le module de rupture en flexion σ_{F} et la ténacité K_{IC}, les figures 3, 4 et 5 permettent de mettre en évidence une augmentation systématique suite à la présence de gahnite avec un optimum commun correspondant à une teneur en ZnO comprise entre 3 et 4.5 % en poids.

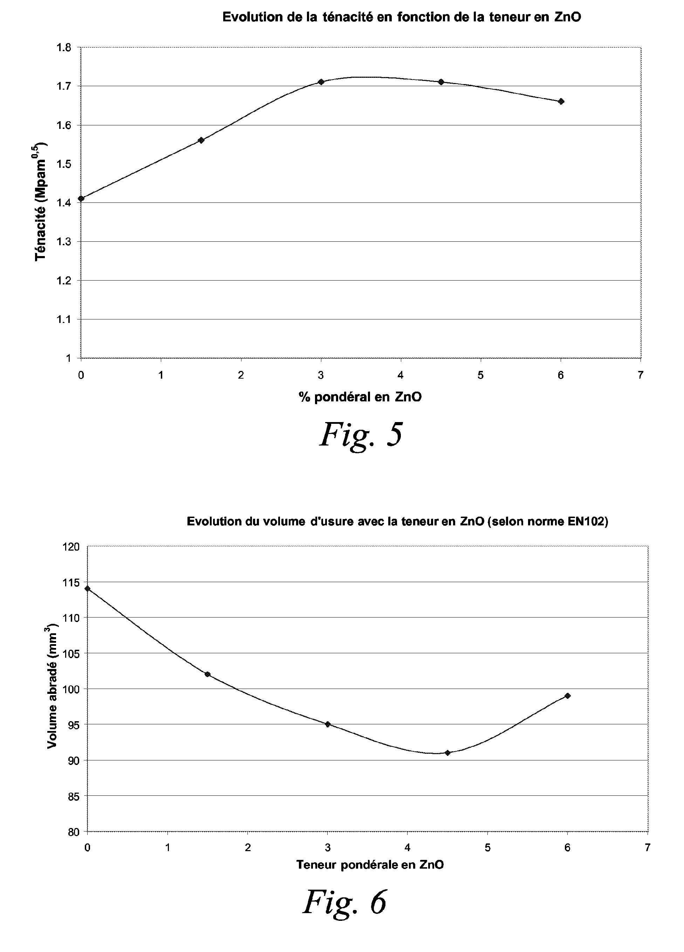

Comme pour l'exemple précédent, l'amélioration des caractéristiques mécaniques s'accompagne d'une réduction des volumes d'usure dont l'amplitude est la plus marquée pour une teneur de 4.5 % en ZnO. Une réduction du volume d'usure de l'ordre de 20 % est obtenue si l'on considère le carreau exempt de ZnO comme référence. Ceci est illustré dans la figure 6.

Enfin, notons que la présence de ZnO même en forte proportion interfère peu sur la teinte des carreaux et n'induit pas de déformation à la cuisson.

Au contraire, il semble même qu'au niveau du procédé, la présence de l'oxyde de zinc soit bénéfique en permettant de réduire les défauts de pressage sur les faces latérales des carreaux.

Il est clair que l'invention n'est pas limitée aux différentes formes de réalisation décrites ci-dessus, mais d'autres variantes peuvent être envisagées sans sortir du cadre de la présente invention.

## Revendications

1. Produit céramique formé essentiellement de carreaux pour revêtement de sols ou de parois présentant une masse céramique dans laquelle est incorporée une phase cristalline de mullite (3Al₂O₃·2SiO₂) formée in situ durant une grésification, **caractérisé en ce que** cette masse céramique comprend, en outre, une phase cristalline de gahnite (Al₂O₃·ZnO) qui est également formée in situ durant la grésification.

2. Produit suivant la revendication 1, **caractérisé en ce que** ladite masse céramique comprend de 10 à 30 % en poids de mullite et entre 2 et 17 % en poids de gahnite.

3. Produit suivant la revendication 1 ou 2, **caractérisé en ce qu'**il présente un module de rupture σ_{F} compris entre 75 et 115 MPa.

4. Produit suivant l'une quelconque des revendications 1 à 3, **caractérisé en ce qu'**il présente un volume d'usure abrasive selon norme EN 102 entre 90 et 110 mm³.

5. Produit suivant l'une quelconque des revendications 1 à 4, **caractérisé en ce qu'**il présente une porosité ouverte entre 0,25 % et 1 % en volume.

6. Composition pour la fabrication d'un produit céramique suivant l'une quelconque des revendications 1 à 5, comprenant entre 60 et 70 % en poids de SiO₂, entre 20 et 33 % en poids d'Al₂O₃ et des fondants, **caractérisée en ce qu'**elle contient entre 1 et 7.5 % en poids de ZnO, la teneur en ZnO étant de préférence comprise entre 4 et 5 % en poids.

7. Composition suivant la revendication 6, **caractérisée en ce que** la teneur en Al₂O₃ est supérieure à la teneur en ZnO d'une manière telle à cristalliser in situ des phases cristallines de gahnite et de mullite au sein de cette composition lorsque celle-ci est soumise à une grésification.

8. Composition suivant la revendication 6 ou 7, **caractérisée en ce qu'**elle comprend un catalyseur de nucléation de la gahnite, tel que ZrO₂ et/ou TiO₂.

9. Procédé de fabrication du produit répondant à l'une quelconque des revendications 1 à 5, suivant lequel on forme à partir d'un mélange poudreux sensiblement homogène, comprenant au moins des silicates, de l'oxyde d'aluminium et des fondants, des plaques ou blocs que l'on soumet ensuite à une grésification jusqu'à obtenir des plaques ou blocs céramiques contenant une phase cristalline de mullite, **caractérisé en ce que** l'on ajoute au mélange susdit de l'oxyde de zinc en quantité suffisante pour former durant la grésification, conjointement avec la mullite, une phase cristalline de gahnite.

10. Procédé suivant la revendication 9, **caractérisé en ce que** l'on forme à partir de la composition répondant à l'une quelconque des revendications 6 à 8 les plaques ou blocs que l'on soumet ensuite au traitement thermique précité.
